# EUROPÄISCHE PATENTSCHRIFT

(11) **EP 0 600 986 B1**
(45) Veröffentlichungstag und Bekanntmachung des Hinweises auf die Patenterteilung: **12.03.1997**
(21) Anmeldenummer: 92917907.5
(22) Anmeldetag: 12.08.1992
(51) Int. Cl.: B60N 2/42

(54) **SITZTEIL EINES FAHRZEUGSITZES**
SITTING SECTION OF A VEHICLE SEAT
PARTIE SIEGE D'UN SIEGE DE VEHICULE

(30) Priorität: 30.08.1991 DE 4128954
(43) Veröffentlichungstag der Anmeldung: 15.06.1994
(73) Patentinhaber: NAUE/ JOHNSON CONTROLS ENGINEERING VERWALTUNGS GmbH, D-42929 Wermelskirchen (DE)
(72) Erfinder: SCHMALE, Gerhard, D-5609 Hückeswagen (DE); SOMMER, Norbert, D-5632 Wermelskirchen (DE); ZYNDA, Martin, D-5630 Remscheid 11 (DE)
(74) Vertreter: Bergen, Klaus, Dipl.-Ing.
(86) Internationale Anmeldenummer: EP9201839
(87) Internationale Veröffentlichungsnummer: WO9304892

(56) Entgegenhaltungen:
- FR-A- 2 548 105
- FR-A- 2 549 784
- GB-A- 1 322 280
- GB-A- 1 348 873
- GB-A- 2 087 226
- PATENT ABSTRACTS OF JAPAN vol. 014, no. 171 (C-0706)3. April 1990; & JP,A,2 021 815 (SUZUKI)

## Beschreibung

### Technisches Gebiet

Es ist vielfach bekannt, den Sitzteil für Fahrzeugsitze aus einem unteren Tragteil aus gepreßtem Stahlblechrahmen versehen mit unterschiedlichen Federeinrichtungen, wie elastischen Gurten oder Stahlfederpaketen, ähnlich den Polstersitzen von Stühlen bzw. Sesseln, auszurüsten, auf denen das Sitzpolster aufgebracht wird.

### Stand der Technik

Bei einer bekannten Ausführung dieser Art (DE-GM 77 28 111) sind eine Vielzahl elastischer Quergurte vorgesehen, auf denen der Polsterkörper aufliegt, wobei zur Sicherung gegen ein Nachvornrutschen des Sitzbenutzers bei starkem Abbremsen oder bei einem Unfall, der vordere Bereich des Polsterkörpers in Querrichtung einen leistenförmigen Stützkörper aufweist. Diese Lösung ist jedoch sehr aufwendig und konnte daher keine Verbreitung finden.

Auch bei anderen bekannten Vorschlägen dieser Art sind für die einzelnen Funktionen, wie abgepolstertes und gut federnd nachgiebiges Sitzen sowie Sicherheit gegen Durchrutschen der den Sitz benutzenden Person bei starker Fahrzeugverzögerung, jeweils gesonderte Teile bzw. Baugruppen verwendet, was zu einem zu großen Aufwand, zu hohen Gewichten und komplizierten sowie störanfälligen Anlagen führt.

So weist die DE-C-39 07 942 ein Untergestell, ein dickes Polstersitzkissen, einen Sitzrahmen für dieses Kissen, eine Vielzahl von Stahlschraubendruckfedern, zwischen einem Rahmen und dem Untergestell wirkend, sowie einen umfangreichen, schwenkbaren Bügel und diesen blockierende Einrichtung auf.

Schließlich wird in FR-A-2 548 105 ein Kraftfahrzeugsitz gemäß dem oberbegriff des Anspruchs 1 dargestellt und beschrieben, der aus einem Lagergestell besteht, auf dem ein Sitzteil und eine zu diesem verstellbare Rückenlehne am Fahrzeug abgestützt sind, die beide jeweils von einer Tragschale und einem von dieser aufgenommenen Polster gebildet werden, wobei zumindest die Tragschale des Sitzteils als Hohlraum mit einem das Polster vertikal stützenden zentralen Hohlteil und einem das Polster horizontal fixierenden Randhohlteil gebildet ist. Charakteristisch für diese Konzeption ist, daß die als Hohlrahmen gestaltete Sitzschale sowohl im vorderen als auch im hinteren Bereich über Klemmen fest mit Tragrohren verbunden ist. Durch diese Konstruktion ergeben sich ungünstige Dämpfungseigenschaften. Zudem sind beim bekannten Vorschlag seitliche Wände vorgesehen, die zusätzlich gewünschten Federeigenschaften entgegenstehen.

### Darstellung der Erfindung

Der Erfindung liegt das Problem zugrunde, einen Automobilsitzt zu schaffen, der nicht nur bequem ist, sondern auch einfach aufgebaut zu einer preiswerten Konzeption führt, die eine gute Schwingungsdämpfung besitzt und die unangenehmen sowie gesundheitsbeeinträchtigenden Eigenschwingungsbereiche so verlagert, daß sie für den Benutzer der Sitze nicht mehr wirksam werden.

Die erfindungsgemäße Lösung dieser Aufgabe ist im Anspruch 1 angegeben; die Unteransprüche umfassen vorteilhafte Ausgestaltungen.

Die mit der Erfindung erzielten Vorteile bestehen insbesondere darin, daß durch die kombinierte Verwendung der Sitzschale sowohl als Auflage für das Polsterkissen als auch als unteres Federelement und als Crashschutzsperre wenig aufwendige und somit preiswerte und für den Crashfall den Sitzbenutzer sicher gegen Durchrutschen nach vorn sbstützende und verhältnismäßig leichte Fahrzeugsitze, deren Gesamteigenschwingungszahl außerhalb der Bereiche derjenigen der menschlichen Körperteile liegt, geschaffen sind. Eine wesentliche Aufwandsminderung ergibt sich durch die Möglichkeit, bei der erfinderischen Gestaltung der Sitzschale Verhältnismäßig besonders dünne Polsterkissen anzuwenden.

### Kurze Beschreibung der Zeichnung

In der Zeichnung sind Ausführungsbeispiele der Erfindung schematisch dargestellt, es zeigen:
- Fig. 1: eine perspektivische Ansicht eines Erfindungsgegenstandes, bei dem Rahmen und Sitzfläche einstückig ausgeführt ist,
- Fig. 2: einen ähnlichen Querschnitt gemäß der Linie A-B nach Fig. 1, ergänzt durch eine komplette Polsterung,
- Fig. 3: einen Sitz wie Fig. 1, jedoch bei zweistückiger Ausführung,
- Fig. 4: einen Schnitt gemäß der Linie C-D nach Fig. 3,
- Fig. 5: eine perspektivische Darstellung eines Fahrzeugsitzes bei hinten zusätzlich federnd aufgefangener Sitzschale,
- Fig. 6: in perspektivischer Darstellung eine weitere Ausführungsvariante,
- Fig. 7: einen Schnitt gemäß der Linie E-F nach Fig. 6,
- Fig. 8: eine Variante zur Fig. 7.

### Wege zur Ausführung der Erfindung

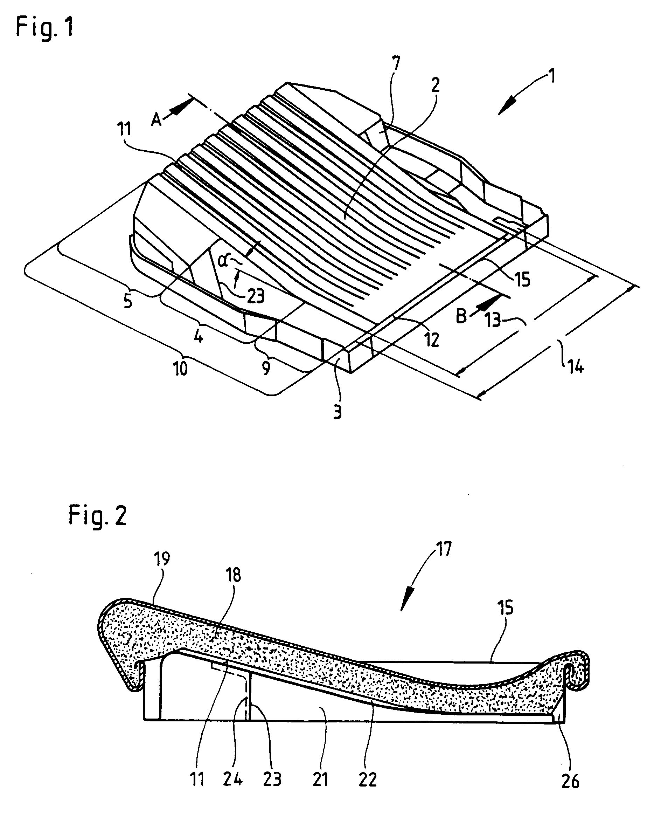

Eine Sitzschale 2 mit einem Rahmen 3 zu einem Unterbau 1 eines Sitzteils eines Fahrzeugsitzes gemäß Fig. 1 ist aus Stahlblech einstückig durch Tiefziehen, Prägen und Schneiden spanlos hergestellt. Im unteren Bereich des Rahmens 3 sind nicht dargestellte Anschlüsse zum Befestigen und Versetzen des kompletten Sitzes auf dem Fahrzeugboden vorgesehen.

In einem vorderen Bereich 5 des Unterbaues 1 ist dieser an seiner Vorderseite und beidseitig hochgezogen, wobei ein mittlerer Bereich 4 unter einem Winkel α von etwa 15° nach hinten abfällt bis zu einem kurzen hinteren Bereich 9. Der vordere Bereich 5 weist etwa eine Länge von 30% der Gesamtlänge 10 des Unterbaues 1 auf. Ab dem vorderen Bereich 5 ist die Sitzschale 2 als freitragender Träger ausgebildet, wobei der etwa parallel zum Boden verlaufende hintere Bereich 9 höhenmäßig im Bereich des Rahmens 3 liegt. In die Sitzschale 2 sind auf ihrer Breite nebeneinanderliegende Längssicken 11 eingeprägt, die sowohl in der Höhe und Breite parallel als auch in der Höhe nach hinten in besonderer Weise auslaufend und/oder in der Breite ebenso nach hinten sich verringernd ausgeführt sein können, wobei diese Verjüngungen vorzugsweise so ausgeführt sind, daß die Sitzschale sowohl weitgehendst als Träger gleicher Festigkeit als auch im Hinblick auf die Eigenschwingungszahl des gesamten Sitzteiles, wie schon ausgeführt, günstig liegt. Diese Sicken 11 enden bevorzugt vor einer Hinterkante 12 der Sitzschale 2, wobei zwischen ihr und der inneren Rahmenhinterkante 15 ein entsprechender Freiraum vorliegt.

Diese Gestaltungen sind durch die zu erreichende Dämpfung sowie Eigenschwingungszahl der freischwingenden Sitzschale 2 unter Berücksichtigung der Gesamtgestaltung und -ausrüstung des kompletten Sitzes, also mit seiner Polsterung und dem Überzug, bestimmt, so daß der Sitzkomfort trotz geringen Aufwandes zur Herstellung des Sitzes sehr günstig ist, was auch bedingt, daß die Eigenschwingungszahl desselben von denen der Hauptkörperteile des Menschen abweicht. Unter dem vorderen Bereich 5, der mit dem etwa senkrecht verlaufenden Kantenbereich 7 nach hinten abschließt, können bei Bedarf, diesen abstützend, entsprechende Verstärkungsteile oder Quersicken zusätzlich vorgesehen werden. Die Breite 13 der Sitzschale 2 ist etwas schmaler als die lichte Weite 14 des Rahmens 3 ausgeführt.

Die Schnittdarstellung nach Fig. 2 hat ein komplettes Sitzteil 17 zum Gegenstand, indem auf dem Unterbau 21 ein verhältnismäßig dünnes Polster 18 aufgebracht, das mit einem Bezug 19 umhüllt ist. Hierbei stellt der Unterbau 21 eine Ausführungsvariante zum Unterbau 1 dar, bei dem beispielsweise eine Sitzschale 22 unbelastet im hinteren Bereich tiefer liegt als eine Oberkante 15 eines Rahmens 26.

Die Längssicken 11 verringern allmählich nach hinten im Sinne eines Trägers gleicher Festigkeit ihre Abmessungen im mittleren Bereich und laufen im hinteren Bereich 9 ebenso aus. Eine Abschlußkante 23 entspricht etwa dem Kantenbereich 7 nach Fig. 1. Eine Brücke 24 kann im Bedarfsfall zusätzlich zur Anwendung kommen.

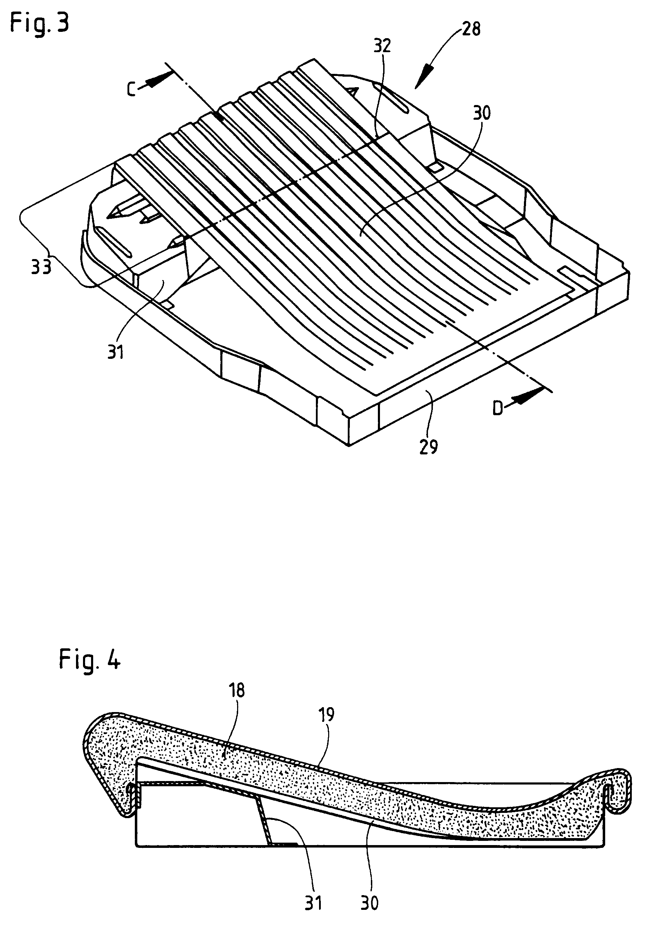

Bei einem Unterbau 28 gemäß Fig. 3 entsprechen ein Rahmen 29 und eine Sitzschale 30 etwa zugehörigen Teilen des Unterbaues 1 nach Fig. 1. Lediglich sind die Sitzschale 30 und der Rahmen 29 als gesonderte Teile hergestellt, wobei ein vorderer Bereich 33 der Sitzschale 30 mit einer Brücke 31 des Rahmens 29 durch Schweißung, Nietung oder Verschraubung fest verbunden ist. Die Fig. 4 zeigt die entsprechenden Verhältnisse gemäß der Fig. 2, wobei die Polsterung 18 mit dem Bezug 19 den Teilen nach Fig. 2 entsprechen.

Im Fall der Oberbelastung, beim sogenannten Crashfall, biegen sich die Sitzschalen 2 bzw. 30 am Beginn ihres freischwingenden Teiles, also etwa um die Linie 32, infolge der hohen Massenbelastung durch die aufsitzende Person nach unten ab, wodurch dieser ein sicherer Halt gegen Durchrutschen nach vorn verliehen wird, was die Verletzungsgefahr mindert.

Mit der Brücke 31 wird die Sitzschale 30 angeschlossen. Hierbei kann die Sitzschale 30 auch aus einer geeigneten Kunststoff- bzw. Schichtholzplatte oder dgl. hergestellt sein, die dann mit der Brücke 31 entsprechend verschraubt wird.

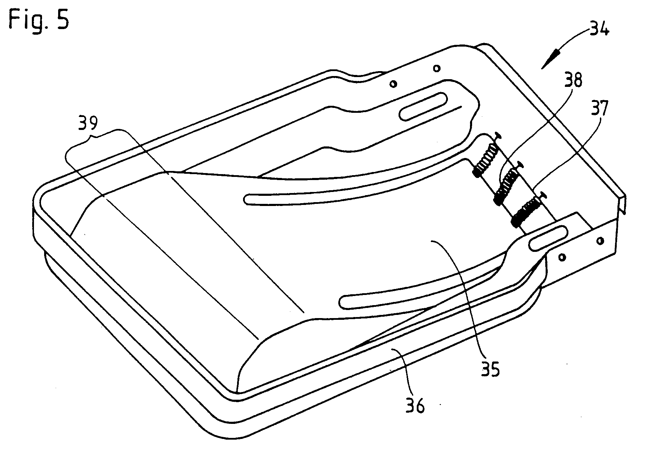

Ein Unterbau 34 gemäß Fig. 5 ist mit einer einstückig mit einem Rahmen 36 hergestellten oder gesondert gefertigten und fest an dem Rahmen 36 angeordneten Sitzschale 35 ausgerüstet, die ähnlich der bereits behandelten gestaltet, aber glatt oder nur leicht gesickt ausgeführt ist und an ihrer Hinterkante 37 über Federeinrichtungen 38, die einen Teil der Belastungen, die auf die Sitzschale 35 durch die aufsitzende Person zukommen, zusätzlich elastisch mit übernehmen. Dargestellt ist eine Vielzahl von Schraubenzugfedern, die anderseitig am Rahmen 36 befestigt sind. Es können auch alle anderen bekannten Federeinrichtungen, so auch konisch gewundene Schraubenzug- oder Druckfedern oder auch entsprechend wirkende Blattfedern, Gummipuffer, Luftkissen und dgl. zum Einsatz kommen; es ist aber so vorzugehen, daß stets die sich ergebende Gesamteigenschwingungszahl dieses Sitzsystems außerhalb der der hauptsächlichen menschlichen Körperteile liegen, wozu Federeinrichtungen mit nicht linearen Kennlinien, wie z.B. die erwähnten konisch gewundenen Schraubenzugfedern dienen. Ein vorderer Bereich 39 verläuft im wesentlichen parallel zum Boden, was den Sitzkomfort, je nach den Gesamtabmessungen des Sitzteiles, erhöhen kann.

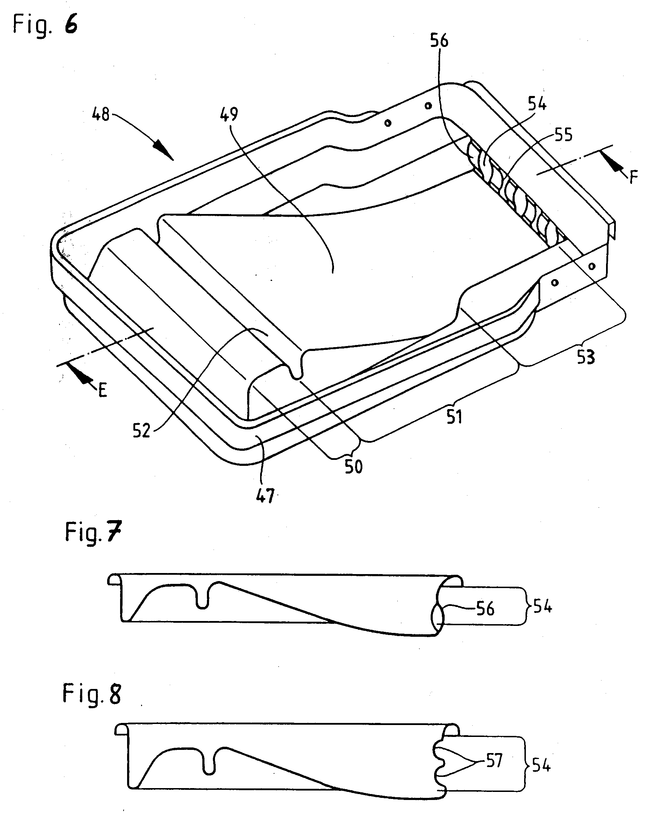

Schließlich zeigt Fig. 6 eine weitere Variante eines Unterbaues 48, bei der die Sitzschale 49 zur Erhöhung ihrer Federeigenschaften sowohl zwischen dem vorderen und mittleren Bereich 50 bzw. 51 mit einer oder mehreren Quersicken 52 versehen ist, als auch, daß ein hinterer Bereich 53, nach oben abgebogen, in diesem Stück 54 auf der gesamten Breite durch Einschnitte 55 in eine Vielzahl Teilbereiche 56 getrennt ist, wobei diese abwechselnd zueinander nach vorn und hinten gewölbt ausgeführt sind, wie es die Fig. 7 deutlich zeigt.

Es kann auch so vorgegangen werden, daß das hochgehende Stück 54 mit wellenförmigen Quersicken 57 gemäß Fig. 8 versehen ist.

Die Erfindung ist auf die behandelten Beispiele nicht beschränkt, insbesondere können die mit den einzelnen Ausführungsbeispielen offenbarten Merkmale sinngemäß untereinander vertauscht werden.

### Gewerbliche Anwendbarkeit

Mit der Erfindung werden Fahrzeugsitze geschaffen, die durch die kombinierte Verwendung der Sitzschale sowohl als Auflage für ein Polsterkissen als auch als unteres Federelement und als Crashschutzsperre nicht zuletzt unter Sicherheitsgesichtspunkten gewerblich umfassend anzuwenden sind.

## Patentansprüche

1. Sitzteil eines Fahrzeugsitzes, das einen Rahmen, eine an ihm angeordnete dünnwandige Sitzschale, die in ihrem vorderen Bereich am Rahmen fest angeschlossen ist, sowie hierauf befindlich eine elastische Sitzauflage aus Schaumstoff, Gummihaar oder dgl., umhüllt mit einem Überzugstoff, aufweist, dadurch gekennzeichnet, daß die Sitzschale (2, 22, 30, 35, 49) in ihrem mittleren sowie hinteren Bereich (9, 53) mindestens beidseitig frei schwingbar ausgeführt ist, so daß sie einen einseitig eingespannten Träger bildet, wobei der mittlere oder dieser und der vordere Bereich nach vorn um einen Winkel (α) von etwa 15° ansteigend verläuft.

2. Sitzteil eines Fahrzeugsitzes nach Anspruch 1, dadurch gekennzeichnet, daß die Sitzschale (2) und der Rahmen (3) entweder einstückig als Stahlblechpreßteil hergestellt und sie an ihrer Hinterkante (12) ebenfalls frei schwingbar ausgeführt ist oder daß die Sitzschale (30) als lose gefertigtes, frei schwingbares Teil durch Schweißung, Nietung oder dgl. mit ihrem vorderen Bereich (33) mit dem Rahmen (29) verbunden wird, sowie, daß die Sitzschale (2, 30) in Längsrichtung entweder mit parallel verlaufenden, oder nach hinten sich in der Breite und/oder Höhe in spannungs- und schwingungsmäßig günstiger Weise verjüngenden Sicken (11) versehen ist.

3. Sitzteil eines Fahrzeugsitzes nach den Ansprüchen 1 und 2, dadurch gekennzeichnet, daß unterhalb des vorderen hochliegenden Bereiches (5, 39) der Sitzschale (2, 30) eine sie abstützende, am Rahmen (29) fest angeordnete Brücke (24, 31) vorgesehen sein kann.

4. Sitzteil eines Fahrzeugsitzes nach den Ansprüchen 1 und 2, dadurch gekennzeichnet, daß die auch hinten frei schwingbare Sitzschale (35) und der Rahmen (36) entweder einstückig als Stahlblechpreßteil hergestellt ist oder, daß die Sitzschale (35) als loses Teil hergestellt und durch Schweißung, Nietung oder dgl. mit dem Rahmen (36) und ggf. mit der Brücke (24, 31) fest verbunden wird, wobei sie sowohl glatt als auch leicht gesickt ausgeführt sein kann und im Bereich vor der Hinterkante (37) zwischen ihr und dem Rahmen (36) diese verbindende Federeinrichtungen (38) eingesetzt sind.

5. Sitzteil eines Fahrzeugsitzes nach einem der Ansprüche 1 bis 4, dadurch gekennzeichnet, daß der mittlere Bereich der Sitzschale und teils ihr hinterer Bereich durch eine Vielzahl von nebeneinanderliegenden, ausgeschnitttenen, wellenförmigen Federsträngen gebildet ist.

6. Sitzteil eines Fahrzeugsitzes nach Anspruch 1, dadurch gekennzeichnet, daß im mittleren Bereich (51) einer entweder mit dem Rahmen (47) einstückig hergestellten oder als Losteil eingesetzten Sitzschale (49) vorn im Übergang vom vorderen (50) zum mittleren Bereich (51) eine oder eine Vielzahl tieferer Quersicken (52) eingepreßt sind und die Anschlußpartie des hinteren Bereiches (53) zum Anschluß an den Rahmen (47) hochgeführt ist und dieser Bereich auf die Breite entweder vielfach getrennt ist, wobei diese entstehenden Teilbereiche (56) abwechselnd zueinander nach vorn und hinten gewölbt sind, oder daß diese hintere Anschlußpartie querliegende wellenförmige Sicken (57) aufweist.

7. Sitzteil eines Fahrzeugsitzes nach Anspruch 1, dadurch gekennzeichnet, daß die Gesamteigenschwingungszahl des kompletten Sitzteiles so bemessen ist, daß sie nicht mit einem Eigenschwingungszahlbereich der menschlichen Hauptkörperteile bzw. -organe, wie Kopf, Körper und Schulter, übereinstimmt.

8. Sitzteil eines Fahrzeugsitzes nach einem der Ansprüche 1 bis 7, dadurch gekennzeichnet, daß die lose Sitzschale (30, 35) aus Kunststoff, Schichtholz oder dgl. hergestellt ist.

## Claims

1. A seating part of a vehicle seat having a frame, a thin-walled seat shell arranged thereon, said seat shell being securely fixed in its front region to the frame, and on said shell an elastic seat pad of foamed material, "rubberised hair" or the like, wrapped in a cover material, characterized in that the seat shell (2, 22, 30, 35, 49) can swing freely in its middle and rear regions (9, 53), at least on both sides, forming a beam with one end fixed, and that the middle region or the middle and the front regions extend(s) upwardly forwards at an angle (α) of about 15°.

2. A seating part of a vehicle seat according to claim 1, characterised in that the seat shell (2) and the frame (3) are either produced as an integral steel sheet pressing that is likewise arranged to swing freely at its rear edge (12) or that the seat shell (30) is made as a separate part and is connected in its front region (33) to the frame (29) by welding, riveting or the like so as to swing freely, and that the seat shell (2, 30) is provided with channels (11) that either run parallel or are tapered in width and/or height towards the rear in a manner advantageous in respect of both stress and vibration.

3. A seating part of a vehicle seat according to claims 1 and 2, characterised in that beneath the raised front region (5, 39) of the seat shell (2, 30) a bridge (24, 31) supporting said shell is securely fixed to the frame (29).

4. A seating part of a vehicle seat according to claims 1 and 2, characterised in that the seat shell (35), which is also free to swing at the rear, and the frame (36) are either made integrally as a sheet steel pressing or that the seat shell (35) is made as a separate part and securely fixed to the frame (36), and optionally to the bridge (24, 31) by welding, riveting or the like, and may either be smooth or slightly channelled, and that spring means (38) connecting the rear edge (37) and the frame (36) are inserted in the region in front of the rear edge (37) between it and the frame (36).

5. A seating part of a vehicle seat according to one of claims 1 to 4, characterised in that in the middle region of the seat shell and part of its rear region are constituted by a plurality of adjacent, cut-out, wave-shaped spring strands.

6. A seating part of a vehicle seat according to claim 1, characterised in that in the middle region (51) of a seat shell (49) that is either made integrally with the frame (47) or inserted as a separate part one or more relatively deep transverse channels (52) are pressed in at the front in the transition from the front (50) to the middle region (51) and the connecting part of the rear part (53) rises to its connection to the frame (47) and this region is either multiply separated across its width, with the resulting sections (56) being alternately bowed towards the front and the rear, or this rear connecting part is provided with transverse wave-shaped channels (57).

7. A seating part of a vehicle seat according to claim 1, characterised in that the overall natural frequency of the complete seating part is such that it does not coincide with a natural frequency range of the main parts or organs of the human body, such as the head, body and shoulders.

8. A seating part of a vehicle seat according to claims 1, 2, 3 and 4, characterised in that the separate seat shell (30, 35) is made of plastics material, plywood or the like.

## Revendications

1. Assise d'un siège de véhicule, comprenant un bâti et une surface d'assise à paroi mince qui est disposée sur lui et qui est raccordée rigidement au bâti dans sa région avant, ainsi qu'une couche d'assise élastique en matière alvéolaire, en bourre de caoutchouc ou similaire qui se trouve sur cette surface et qui est enveloppée dans un tissu de revêtement, caractérisée par le fait que la surface d'assise (2, 22, 30, 35, 49) est réalisée en pouvant osciller librement, du moins des deux côtés, dans ses régions centrale et arrière (9, 53), de sorte qu'elle constitue un support encastré d'un seul côté, cependant que la région centrale ou cette dernière et la région avant s'étendent en montant vers l'avant sous un angle (α) de 15° environ.

2. Assise d'un siège de véhicule selon la revendication 1, caractérisée par le fait que la surface d'assise (2) et le bâti (3) sont fabriqués d'un seul tenant sous la forme d'une pièce emboutie en tôle d'acier, et qu'ils sont réalisés en pouvant également osciller librement sur leur bord arrière (12), ou encore par le fait que la surface d'assise (30) réalisée sous la forme d'une pièce qui est fabriquée indépendamment et qui peut osciller librement est reliée au bâti (29) par sa région avant (33) par soudage, rivetage ou similaire, ainsi que par le fait que la surface d'assise (2, 30) est pourvue dans la direction longitudinale de moulures (11) qui s'étendent parallèlement entre elles, ou encore dont la largeur et/ou la hauteur se rétrécissent vers l'arrière d'une manière favorable quant aux contraintes et aux oscillations.

3. Assise d'un siège de véhicule selon les revendications 1 et 2, caractérisée par le fait qu'un pont (24, 31) qui est solidaire du bâti (29) et qui supporte la surface d'assise (2, 30) peut être prévu au-dessous de la région avant surélevée (5, 39) de celle-ci.

4. Assise d'un siège de véhicule selon les revendications 1 et 2, caractérisée par le fait que la surface d'assise (35) qui peut également osciller librement à l'arrière et le bâti (36) sont fabriqués d'un seul tenant sous la forme d'une pièce emboutie en tôle d'acier, ou encore par le fait que la surface d'assise (35) est fabriquée sous la forme d'une pièce indépendante, et qu'elle est reliée au bâti (36), et au pont (24, 31) le cas échéant, par soudage, rivetage ou similaire, cependant qu'elle peut être aussi bien lisse que légèrement moulurée, et que, dans la région qui est située devant le bord arrière (37) entre elle et le bâti (36), des dispositifs élastiques (38) qui les relient sont insérés.

5. Assise d'un siège de véhicule selon l'une des revendications 1 à 4, caractérisée par le fait que la région centrale de la surface d'assise et une partie de sa région arrière sont constituées par une pluralité de bandes élastiques ondulées et juxtaposées qui sont obtenues par découpage.

6. Assise d'un siège de véhicule selon la revendication 1, caractérisée par le fait que, dans la région centrale (51) d'une surface d'assise (49) fabriquée d'un seul tenant avec le bâti (47) ou utilisée sous la forme d'une pièce indépendante, une ou plusieurs moulures très profondes (52) sont estampées à l'avant dans la zone de transition entre la région avant (50) et la région centrale (51), que la zone de la région arrière (53) qui est destinée à son raccordement au bâti (47) s'étend vers le haut, et que cette zone est séparée plusieurs fois durs le sens de la largeur, ces zones partielles (56) qui prennent naissance étant alors recourbées alternativement vers l'avant et vers l'arrière les unes par rapport aux autres, ou encore que cette zone de raccordement arrière présente des rainures transversales (57) en forme d'ondulations.

7. Assise d'un siège de véhicule selon la revendication 1, caractérisée par le fait que la fréquence propre d'ensemble de l'assise complète est calculée d'une manière telle qu'elle ne coïncide pas avec la gamme des fréquences propres de parties principales ou, respectivement, d'organes du corps humain comme la tête, le corps et les épaules.

8. Assise d'un siège de véhicule selon l'une des revendications 1 à 7, caractérisée par le fait que la surface d'assise indépendante (30, 35) est fabriquée en matière plastique, en bois stratifié ou similaire.
